# EUROPEAN PATENT APPLICATION

(11) **EP 3 165 783 A1**
(43) Date of publication of application: **10.05.2017**
(21) Application number: 16190460.2
(22) Date of filing: 23.09.2016
(51) Int. Cl.: F16C 33/10

(54) **BUSH ASSEMBLY**

(30) Priority: 05.11.2015 TW 104136538
(71) Applicant: Shine Ying Co., Ltd, 300 Hsinchu City (TW)
(72) Inventor: Lai, Wen-Chen, 300 Hsinchu City (TW)
(74) Representative: Lang, Christian

(57) **Abstract**

A bush assembly includes a porous inner unit (10) being axially embedded in an outer unit (20) adapted to be press-fitted with each other via mating surfaces at both ends of the embedded two units (10, 20) between which a storage chamber (32) is formed to store lubricating media therein.

## Description

### FIELD OF THE INVENTION

The invention relates to a bush assembly, particularly to a novel bearing configuration with storage chamber formed by embedding an inner unit in an outer unit for improving performance under severe operating conditions.

### BACKGROUND OF THE INVENTION

Various types of bush assemblies possessing self-lubricating feature have been developed; one of the important types being those made from a porous material formed by powder metallurgy. However, the bush assemblies usually fail to operate under severe conditions, such as shaft rotating at high speed, heavy load and strong vibration. Such failures are mainly caused by lack of structural strength and exhaust of lubricating media resulting in decreasing contact pressure and velocity (PV) limit, thus shaft could be directly contacted with axial hole to induce high frequency impacts, excessive wear and heat generation. These are the industry urgent issues yet to be solved. The lubricating media means lubricating oil and lubricant such as grease or hybrid lubrication agent containing solid lubricating grains that have a higher viscosity than the lubricating oil.

US2002/0146183 A1 discloses a bush assembly that includes an internal concaved outer shell fitted on plural abutting annular units, and forming an oil reservoir between the outer shell and the plural units.

US2006/01716181 A1 discloses a bush assembly that includes an outer shell fitted on two abutting T-shaped units with a concaved outer periphery, and forming an oil reservoir between the outer shell and the two units.

All the aforesaid disclosures need the outer shell to maintain structure integrity and to form the oil reservoir. Their complex compositions also cause structure weakness, fabrication and heat dissipation difficulty. Hence to apply those to the above severe operating conditions, especially when the PV limit is larger than 500 MPa·m/min will face tough challenges.

### SUMMARY OF THE INVENTION

The bush assembly includes an inner unit being axially embedded in an outer unit adapted to be press-fitted with each other via mating surfaces at both ends of embedded units between which a storage chamber is defined.

The invention can notably provide many advantages, such as:
The assembly provides a vast amount and diversified lubricating media to optimize lubricity, upgrade operating limit and prolong the service life.
The assembly provides a robust structure to enhance load capacity, high rotation speed, anti-vibration and low noise capabilities.
The assembly is well suited for small precision motors to support high rotating speed miniature shafts and enhance heat dissipation.
The assembly provides a seamless axial hole to simplify the loading length adjustability and maintain long-term concentricity.
The assembly provides fewer modularized units and can be singly formed by precision moulds to simplify fabrication and reduce the costs.
The assembly provides groove on the axial hole to minimize lubricating media depletion and accommodate debris or oxides.

### BRIEF DESCRIPTION OF THE DRAWINGS

FIG. 1 is a perspective view of an embodiment of a bush assembly.
FIG. **2** is an exploded view of the embodiment of the bush assembly.
FIG. **3** is a sectional view of the embodiment of the bush assembly.

### DETAILED DESCRIPTION

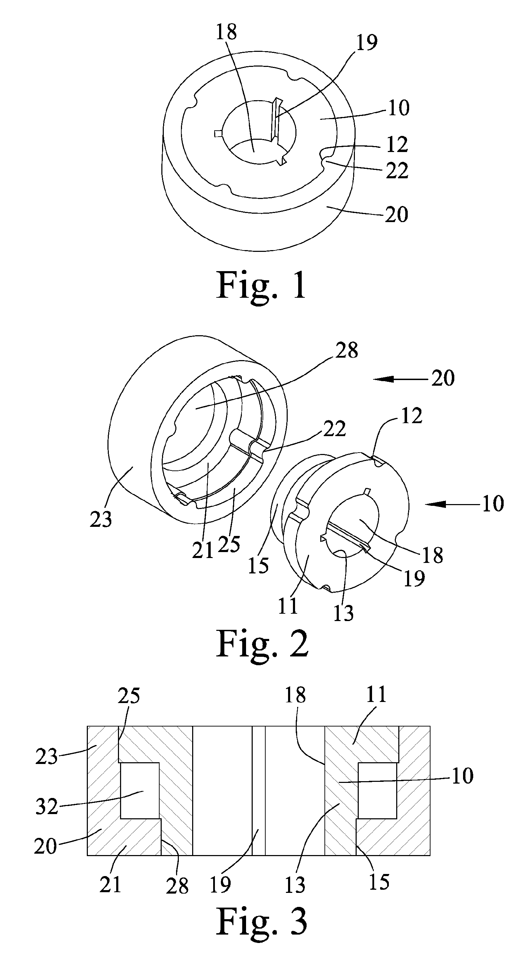

FIGS. **1-3** are an embodiment of a bush assembly comprising a porous inner unit **10** being axially embedded in an outer unit **20** having a same length as the inner unit **10** adapted to be press-fitted with each other via two pairs of mating surfaces at both ends of embedded two units **10, 20,** and forming at least one storage chamber **32** within an accommodation space between the embedded two units **10, 20** to store lubricating media therein. Each pair of the mating surfaces is formed between two peripheries at one end of the embedded two units **10, 20** having complementary shapes and sizes. The inner unit **10** includes an inner tube **13** and a flange **11** being integrally formed with the inner tube **13.** The inner tube **13** contains a circular axial hole **18** axially running through two opposite ends to allow a shaft (not shown) adapted to be run through inside. The flange **11** is formed by radially and outwardly extending from an outer periphery of the inner tube **13** at one end. The outer unit **20** is made from either a dense or a porous material and accommodates the inner unit **10** therein. The outer unit **20** includes an outer tube **23** and a ring **21** being integrally formed with the outer tube **23.** The ring **21** is formed by radially and inwardly extending from an inner periphery of the outer tube **23** at one end forming a central hole **28.** The accommodation space is encompassed by an outer wall surface of the inner tube **13** and inner wall surfaces of the outer tube **23,** the flange **11** and the ring **21.** In application, at least one tendon (not shown) also can be set in the accommodation space and fastened to the inner tube **13** and the flange **11** to enhance structural strength of the bush assembly and divide the accommodation space into plural smaller storage chambers **32.** So that the bush assembly can be made in a simplified structure with few units **10, 20** to store more and diversified lubricating media, improve structure durability, simplify mass production and reduce the costs.

The two pairs of the mating surfaces are respectively formed between an outer periphery of the flange **11** and the inner periphery of the outer tube **23** at the other end, and between an inner periphery of the central hole **28** and the outer periphery of the inner tube **13** at the other end. Another kind of the two pairs of the mating surfaces are respectively formed between the outer periphery of the flange **11** and an inner seat **25** being indented around the inner periphery of the outer tube **23** at the other end with an axial length mating a thickness press-fitted with the flange **11,** and between the inner periphery of the central hole **28** and an outer seat **15** being indented around the outer periphery of the inner tube **13** at the other end with an axial length mating a thickness press-fitted with the ring **21.** It is not subject to the limitation of whether both of the outer seat **15** and the inner seat **25** would be used at once or not, but can be applied to all the possible combinations. Further, because the only requirement between each pair of the mating surfaces is to have complementary shapes and sizes. Therefore, the outer peripheries of the flange **11,** the inner tube **13** and the outer seat **15,** and the inner peripheries of the ring **21,** the outer tube **23** and the inner seat **25** can be designed to be of any size and shape but not limited to a circular shown in the figures of the embodiment.

Compared with the assembled axial hole of the traditional bush assembly formed by plural through holes of the abutting units, the axial hole **18** of the bush assembly is formed by a seamless through hole of the inner unit **10** having the same length as the bush assembly. Therefore, the adjustability of the loading length can be simply achieved by mating the length of the bush assembly accordingly, without the need to reconfigure the number of the axially coupled units and the length of the outer shell for maintaining structural integrity and forming the oil reservoir in the art.

Moreover, the assembled axial hole of the traditional bush assembly may cause joint position deviation and deformation during the courses of die compaction process, assembly and operation resulting in a rather inaccurate concentricity of the assembled axial hole, thereby increasing friction resistance between the assembled axial hole and the rotating shaft. In contrast, the invention of the bush assembly has a seamless axial hole **18** to effectively rule out the above described disadvantages and always maintain coaxial precision for facilitating control and improvement of quality in mass production and keeping operational effectiveness.

In practice, the invention can be applied to different devices; in the embodiment depicted herein a motor is used as an example to facilitate illustration. As such, the bush assembly utilizes the entire outer periphery of the outer unit **20** to be press-fitted into an inner periphery of a jutting chamber located at each end of a motor housing (not shown) in the art. Thus the shaft can be run through two stationary bush assemblies in the motor and supported by two axial holes **18.** In particular, compared with the traditional bush assembly having the outer shell, the bush assembly of the invention is more adaptable to a small precision motor to support a high rotating speed miniature shaft. The jutting chamber in such a motor is limited to a small cross section accommodation space, which is better able to house the bush assembly without the outer shell. Providing the bush assembly with a simple structure and few modularized units **10, 20** in a compact state can reduce the thermal resistance for heat dissipation and allow a thicker wall of the inner tube **13** and the outer tube **23** for structural robustness. Also, the present invention can allow a larger storage chamber **32** for more lubricating media storage, which is further beneficial to reduce noise, improve load capacity and anti-vibration capability, streamline mass production process, and prolong the service life.

Further, the outer periphery of the flange **11** sets at least one slot **12** formed axially thereon to latch on the corresponding at least one rib **22** formed on the inner periphery of the outer tube **23** to further improve structural robustness, anti-vibration capability and load capacity. The slot **12** may also be formed on the inner periphery of the outer tube **23** to latch on the corresponding rib **22** formed on the outer periphery of the flange **11.**

Furthermore, the inner tube **13** includes at least one slender groove **19** being axially indented on the axial hole **18.** Through the rotation of the shaft, the surplus lubricating media in the axial hole **18** can be introduced into the groove **19** so as to reduce the lubricating media depletion and prevent the motor internal pollution from the lubricating media. In addition, the fine debris or oxides in the axial hole **18** also can be introduced into the groove **19** to reduce tribology friction and avoid wear damage. In application, the shape, size, number and position of the slot **12,** the rib **22** and the groove **19** are not limited to the figures shown in the embodiment.

The inner unit **10** and the outer unit **20** are most likely to be made through the powder metallurgy technology to simplify the fabrication and improve quality in mass production and form a porous structure with good permeability of fluid to benefit for lubricating oil impregnation. Therefore the required density and dimensional accuracy of the two units **10, 20** can be singly formed by precision punch moulds through stamping processes.

The lubricating media can be applied before assembly via vacuum impregnated with lubricating oil, and further lubricant can be filled in recesses formed between the flange **11** and the inner tube **13** and between the ring **21** and the outer tube **23,** so that lubricating oil is infiltrated into the structure of the bush assembly and lubricant is filled with the storage chamber **32.** The lubricating media can also be applied after assembly via vacuum impregnated with lubricating oil at once, so that lubricating oil is infiltrated into the structure and the storage chamber **32.**

While the preferred embodiment of the invention has been set forth for the purpose of disclosure, modifications of the disclosed embodiment of the invention may occur to those skilled in the art. The invention is defined by the appended claims only.

## Claims

1. A bush assembly, comprising:
a porous inner unit (10) being axially embedded in an outer unit (20) having a same length as the inner unit (10) adapted to be press-fitted with each other tightly via two pairs of mating surfaces at both ends of embedded two units (10, 20), and forming at least one storage chamber (32) within an accommodation space between the embedded two units (10, 20) to store lubricating media therein, each pair of the mating surfaces being formed between two peripheries at one end of the embedded two units (10, 20) having complementary shapes and sizes;
**characterized in that** the inner unit (10) includes an inner tube (13) and a flange (11) being integrally formed with the inner tube (13), the inner tube (13) containing a circular axial hole (18) axially running through two opposite ends to allow a shaft adapted to be run through inside, the flange (11) being formed by radially and outwardly extending from an outer periphery of the inner tube (13) at one end, the outer unit (20) accommodating the inner unit (10) therein and including an outer tube (23) and a ring (21) being integrally formed with the outer tube (23), the ring (21) being formed by radially and inwardly extending from an inner periphery of the outer tube (23) at one end forming a central hole (28).

2. The bush assembly of claim **1, characterized in that** an outer periphery of the flange (11) has at least one slot (12) formed axially thereon to latch on the corresponding at least one rib (22) formed on the inner periphery of the outer tube (23).

3. The bush assembly of one of the preceding claims, **characterized in that** an outer periphery of the flange (11) has at least one rib (22) formed axially thereon to latch on the corresponding at least one slot (12) formed on the inner periphery of the outer tube (23).

4. The bush assembly of one of the preceding claims, **characterized in that** the lubricating media stored in the at least one storage chamber (32) is lubricating oil.

5. The bush assembly of one of the preceding claims, **characterized in that** the lubricating media stored in the at least one storage chamber (32) is lubricant having viscosity higher than lubricating oil.

6. The bush assembly of one of the preceding claims, **characterized in that** the outer unit (20) is made from a dense material.

7. The bush assembly of one of the preceding claims, **characterized in that** the outer unit (20) is made from a porous material.

8. The bush assembly of one of the preceding claims, **characterized in that** the two pairs of the mating surfaces are respectively formed between an outer periphery of the flange (11) and the inner periphery of the outer tube (23) at the other end, and between an inner periphery of the central hole (28) and the outer periphery of the inner tube (13) at the other end.

9. The bush assembly of one of the preceding claims, **characterized in that** the two pairs of the mating surfaces are respectively formed between an outer periphery of the flange (11) and the inner periphery of the outer tube (23) at the other end, and between an inner periphery of the central hole (28) and an outer seat (15) being indented around the outer periphery of the inner tube (13) at the other end with an axial length mating a thickness press-fitted with the ring (21).

10. The bush assembly of one of the preceding claims, **characterized in that** the two pairs of the mating surfaces are respectively formed between an outer periphery of the flange (11) and an inner seat (25) being indented around the inner periphery of the outer tube (23) at the other end with an axial length mating a thickness press-fitted with the flange (11), and between an inner periphery of the central hole (28) and the outer periphery of the inner tube (13) at the other end.

11. The bush assembly of one of the preceding claims, **characterized in that** the two pairs of the mating surfaces are respectively formed between an outer periphery of the flange (11) and an inner seat (25) being indented around the inner periphery of the outer tube (23) at the other end with an axial length mating a thickness press-fitted with the flange (11), and between an inner periphery of the central hole (28) and an outer seat (15) being indented around the outer periphery of the inner tube (13) at the other end with an axial length mating a thickness press-fitted with the ring (21).

12. The bush assembly of one of the preceding claims, **characterized in that** at least one groove (19) is axially indented on the axial hole (18).

13. The bush assembly of one of the preceding claims, **characterized in that** the accommodation space is encompassed by an outer wall surface of the inner tube (13) and inner wall surfaces of the outer tube (23), the flange (11) and the ring (21).
